Europäisches Patentamt

European Patent Office

Office européen des brevets

(19)

(11) Publication number: **0 007 720**
**B1**

(12) **EUROPEAN PATENT SPECIFICATION**

(45) Date of publication of patent specification: **01.08.84**

(51) Int. Cl.³: **A 63 B 71/06, G 08 B 23/00**

(21) Application number: **79301295.6**

(22) Date of filing: **05.07.79**

(54) An electrically operated line monitor for tennis.

(30) Priority: **10.07.78 GB 2934678**
**10.11.78 GB 4402678**
**29.12.78 GB 5020878**

(43) Date of publication of application:
**06.02.80 Bulletin 80/3**

(45) Publication of the grant of the patent:
**01.08.84 Bulletin 84/31**

(84) Designated Contracting States:
**BE CH DE FR GB NL SE**

(56) References cited:
**DE - A - 2 600 645**
**GB - A - 989 041**
**GB - A - 1 370 332**
**US - A - 3 810 148**

(73) Proprietor: **Carlton, William Charles**
**Villa Tas-Silg Tas-Silg**
**Marsaxlokk (MT)**

(73) Proprietor: **Parnis England, Margaret**
**Villa Aventura Kappara Lane**
**San Gwann (MT)**

(72) Inventor: **Carlton, William Charles**
**Villa Tas-Silg Tas-Silg**
**Marsaxlokk (MT)**
Inventor: **Parnis England, Margaret**
**Villa Aventura Kappara Lane**
**San Gwann (MT)**

(74) Representative: **Kooy, Leendert Willem et al,**
**OCTROOIBUREAU VRIESENDORP & GAADE P.O.**
**Box 266**
**NL-2501 AW The Hague (NL)**

The file contains technical information
submitted after the application was filed and not
included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

It is a feature of the game of tennis that it should be known whether the ball strikes the ground inside or outside certain parts of the court; these certain parts are limited by lines, the outside edges of which are the most important and are hereinafter called critical lines. If any part of the ball strikes any part of the critical line the ball is "good" i.e. the ball is "in".

The invention relates to an electrically operated device to monitor the area near a critical line on a tennis court. The device comprising at least one transmitter in a first position, at least one receiver in a second position and at least one signalling means controlled by the said receiver. The said transmitter projects a first ray the effective part of which registers on the said receiver, the said first ray running substantially parallel to the said critical line and running over an area of the court on which a ball would strike if it were a "good" ball and at least the said receiver comprises limiting means which limit the cross-section of the effective part of the said first ray throughout its useful length so that the said cross-section is substantially smaller in any dimension than the diameter of a tennis ball and so that the highest effective part of the said first ray above the playing surface of the court is less than the height of a tennis ball in play making contact with the ground and a signal being generated by the said signalling means on at least partial interruption of the said first ray.

A similar device is known from US—A— 3 810 148. In this prior art, "in" beams and "out" beams are all projected in the same direction, closely together, ignoring the possibility of interference; moreover, because the device operates on at least partial interruption, an "in" signal can be given to an "out" ball and because the beams execute independant control there is no means of preventing an incorrect signal which might be caused by a skidding ball; further, more rays than are necessary are used. A ray operating on complete interruption is used in US—A— 4 004 805; this ray, sited above the critical line gives an "out" signal for a ball about to bounce "out" but would give the same signal for a ball which had bounced "in".

Rays for use in safety devices on machines and for burglar alarms and for many other uses in detection devices, are well known. It is also well known to limit a ray by modulation, shutters and optical means so that the effective part of a ray will register on a specific receiver; typical object detecting devices are described in British Specifcations 1 425 896 and 989 041.

It is the object of the present invention to provide a device which will improve the chances of correctly assessing, within very close limits, whether the ball strikes the ground inside or outside the correct area of the court when the strike is near a critical line. The technical problems to be overcome are:— 1. To make a positive decision in spite of illusions which may be caused by skidding balls. 2. To make an immediate decision. 3. To make allowance for the fact that no courts are absolutely flat and that irregularities in the court surface can occur during the course of play. 4. To reduce the possibility of interference in view of the distance between transmitters and receivers being usually over 18 metres. 5. To use as few rays as possible to monitor a given area. In the present invention 1 & 2 have been solved by using complete interruption to give a "good" signal when the said first ray is interrupted and, when the area outside a critical line is being monitored, by using a preventing signal; 3 has been solved by placing the said first ray (or master ray) in the line of a ball which must strike the critical line and raising the ray off the ground to counter irregularities in the court surface; 4 has been solved by spacing apart receivers in the same position and/or projecting adjacent rays in opposite directions; 5 has been solved by taking advantage of the bounce of the ball by raising the further rays as high as possible consistent with a tennis ball in play not being able to pass underneath the rays i.e. approx. 4.5 cms.

According to the present invention the monitoring device is characterized in that the said signalling means generates a "good" signal only on the complete interruption of the effective part of the said first ray and the said first ray being so positioned that a ball in play falling across the area of the court in which it would strike if it were a good ball and towards the said critical line and which just completely interrupts the effective part of the said first ray must afterwards strike the said critical line and the receiver of any further ray which is in the same position as the receiver of the said first ray being spaced apart from the receiver of the said first ray by a distance greater than the diameter of a tennis ball.

The invention is developed so that one or more further rays are used, each further ray having the said effective cross-section of the said first ray and each of the further rays being distanced progressively farther from the vertical from the said critical line and at substantially the same height above the playing surface of the court and the distance between any of the rays is such that a ball striking the ground in the area monitored by the device will completely interrupt one of the rays, thereby generating a signal and, when the receivers of any rays are in the same position, these receivers are spaced apart by a distance greater than the diameter of a tennis ball. The cross-section of a ray may conveniently be limited by passing the ray through one or more small apertures but alternative methods of obtaining a similar result may be used. If the device is monitoring only an area of the court on which a ball in play would bounce if it were a "good" ball, any further rays over that area are coupled to the said first ray as far as signalling is concerned so that the complete interruption of the effective part of any ray in this form of the device would cause a "good" signal and because it is a convention in tennis that only "fault" balls are "called", such a signal would preferably be silent; if, however, the device is monitoring an area of the court on which a wall would bounce if it were a "fault" as well as the "good" area monitored by the said first ray operating as the master ray which will shortly be explained, the interruption of the effective part of any further ray would cause a "fault" signal; two or more further rays would be coupled together to give the same effect as far as signalling is concerned but any "fault" signal would be subject to the overriding control of the master ray.

In one form of the invention a transmitter in a first position projects a diverging ray which registers on a plurality of receivers in a second position, the arrangement being such that the said diverging ray is split into a plurality of rays having substantially the same characteristics as the rays already mentioned. This form of the invention is developed so that additionally a transmitter in the said second position projects a diverging ray which registers on a plurality of receivers in the said first position so that this further diverging ray is also split into a plurality of rays each having substantially the same characteristics as the rays already mentioned. The combination allows a rectangular area of the court, just outside a critical line, to be monitored. This, with a further development, is the currently preferred form of the invention.

In another form of the invention, in addition to the effective cross-section of the ray being limited at the receiver, it is also limited at the transmitter, so that the ray can be directed to register on a specific receiver. This could be done either by directing the scan of a ray away from all but one receiver, or by modulation or by apertures. Other methods may be employed. This feature of the invention is useful if an independent master ray shortly to be described is incorporated; it is also useful if the invention is developed so that there are two or more transmitters in a first position aligned with the same number of receivers in a second position, the arrangement being such that the rays connecting the transmitters and receivers are substantially parallel to each other. Alternatively there are, in the first position, at least one transmitter and at least one receiver, and in a second position, at least one receiver and at least one transmitter, the transmitters and receivers being aligned so that the rays associated with them are substantially parallel to each other.

If the signal is generated by the interruption of a ray sited over an area of the court on which a ball in play would bounce if it were a "good" ball, the signal given is preferably silent but if a signal is generated by the interruption of a ray sited over an area of the court on which a ball in play would bounce if it were a "fault" the signal given is preferably audible although a silent signal such as a light may also be used. The effect is to monitor the area of the court adjacent to the ray because the ball will interrupt the reception of the ray on approaching the ground to bounce or on leaving the ground after bouncing.

The further rays may be sited to monitor either the area of the court on which a ball would bounce if it were a "good" ball or the area on which a ball would bounce if it were a "fault". When the latter is the case, however, it can occasionally happen that a "good" ball can skid along the ground so that it interrupts a further ray over the "fault" area as well as the "said" first ray over the "good" area; this would give a false alarm. To cater for this eventuality, the "said" first ray is given an additional feature and becomes the master ray. This master ray is similar to the "said" first ray already described as far as its size and position is concerned but it is an independant ray so that if it is completely interrupted by the passage of a ball, the master ray immediately prevents any signal that would have been caused by the same ball interrupting any of the further rays outside the critical line. This effect is achieved, preferably, by electrically preventing any signal from the fault rays from reaching the fault alarm. This development is used in the currently preferred form of the invention.

The receivers of the further rays are spaced apart so that the rays may register on their correct receiver without interference from other rays, this has the added advantage that fewer rays are needed to monitor a given area. Wide spacing is obtained by keeping the effective part of the further rays as high as possible consistent with a tennis ball not being able to pass under the rays without completely interrupting them. This does not apply to the "said" first or master ray the position of which is dictated by the necessity for it to be completely interrupted by any ball in play which strikes the critical line. The effect is to monitor the area of the court adjacent to any ray because the ball will interrupt the reception of the ray by its receiver either on approaching the ground to bounce or on leaving the ground after bouncing.

The rays currently used are infra red or gallium arsenide based but any other rays which achieve similar results may be used. The reaction of a receiver to the interruption of its ray must be very fast and it is an advantage if a delay is incorporated so that although the signal is instantly actuated by the interruption of a ray, the signal itself is prolonged after the interruption of the ray has ceased. The transmitters are conveniently housed in weatherproof boxes which are designed and sited so that the axes of the rays will cross the playing surface of the court at a height of about 4.5 centimetres. It is currently preferred that the greatest dimension of the effective cross-section of a typical ray is less than 2.5 centimetres and that the axis of the nearest of the "fault" rays to the vertical from the critical line being monitored is sited about 15 centimetres outside the vertical with the other "fault" rays distanced progressively further from the critical line. If the rays are parallel to each other, the distance between their axes should be about 15 centimetres but if the rays diverge from the transmitter, the distance between the rays at the receiver end should be about 15 centimetres. It is currently preferred that the axis of the master ray should be between 5 and 10 centimetres inside the vertical from the critical line being monitored. The authority governing the game will almost certainly lay down the position in the light of experience and the perfection or otherwise of the court being used.

The figures just given are currently considered suitable for monitoring the service line for which the device is primarily intended; if it were desired to monitor an area in which the ball was likely to fall more vertically, the rays would be closer together. A device not required as the game progresses is suspended, for instance, by cutting off the supply to the audible "fault" alarm after a "good" service. The boxes housing the transmitters and receivers may be made adjustable to assist alignment of the rays. Reflectors may be incorporated to change the direction of the rays so that, for instance, the rays are projected from and received on the same side of the court. The siting of the rays, particularly the "fault" ray nearest to its critical line and an associated master ray, is very important. If the "fault" ray nearest to a critical line is too far from the vertical from that critical line, a ball could strike the ground outside the critical line and then bounce over the nearest "fault" ray, thus giving no alarm. If the master ray is too far in from the vertical from its critical line, a ball could pass over the master ray without interrupting it, then strike the critical line and, after bouncing, interrupt a "fault" ray and thus actuate an alarm without cause.

In order that the invention may be understood and readily carried into effect, the following description is made with reference to the accompanying drawings in which:

Figure 1 is a diagrammatic view showing a cross-section of a typical arrangement of rays in relation to the surface of the court and the bounce of the ball.

Figure 2 is a diagrammatic view of one side of a tennis court showing some typical positions for various forms of the device.

Figure 3 is a diagrammatic front elevation with the associated plan view of the form of the invention shown in Figure 1 on a smaller scale.

Figure 4 is a diagrammatic plan view of the arrangement of the rays in the currently preferred form of the invention.

Figure 5 is a diagrammatic view of the form of the invention shown in Figure 4 showing on a larger scale a cross-section through the rays in relation to the surface of the court and a critical line.

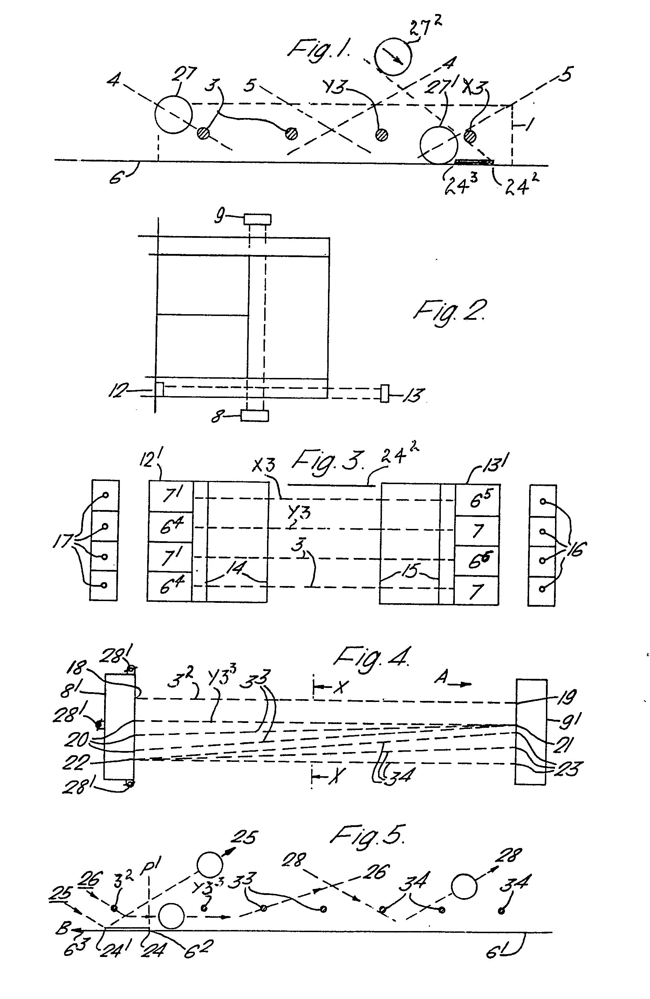

Referring now to Fig. 1, and, where relevant to Fig. 3 and 4, the outline of a typical box $12^1$ housing one unit of the invention is shown in relation to the cross-section of four rays of which X3 is the first said ray and rays Y3, 3, 3, are further rays and to a boundary line $24^3$-$24^2$ the outside edge of which is a critical line. The device of which this unit is a part would monitor an area of the court on which a ball would bounce if it were a "good" ball and corresponds to the device shown at 12-13 on Fig. 2 and with a matching unit in Fig. 3. The distance between the axes of the rays X3, Y3, 3, 3, is, in this instance, about 15 centimetres and if the receivers of any rays are in the same position— for instance receivers 20 in Fig. 4 or receivers $6^5$ in Fig. 3 the effective part of the rays at the receivers concerned are spaced apart by not less than greater than the diameter of a tennis ball. In the device of Figures 1 and 3, if the reception of any ray is completely interrupted, the signalling means to which all the rays are coupled, cause a "good" signal.

Referring now to Fig. 2, this shows two forms of the invention in position to monitor critical lines. Boxes 8 and 9 contain transmitters and receivers arranged in the currently preferred form of the invention to monitor, in this instance, the service line; further explanation will be given with reference to Figures 4 and 5. Boxes 12 and 13 contain transmitters and receivers which provide several parallel rays which, in this instance, monitor an area just inside a critical line on the doubles court. In this case, a signal would indicate that the ball was "good".

Referring now to Figure 3, a box $12^1$ houses two transmitters $7^1$ and two receivers $6^4$; A box $13^1$ houses two receivers $6^5$ and two transmitters 7. Incorporated in box $12^1$ are two screens 14 spaced about 30 centimetres apart and in box $13^1$ are two screens 15 also about 30 centimetres apart. In the screens and aligned with their respective transmitters and receivers are small apertures 17 in box $12^1$ and similar apertures 16 in box $13^1$; The apertures are about 1.5 centimetres in diameter. These apertures limit the spread of the rays $3^1$ at the transmitter and the cross-section of the rays $3^1$ at the receivers. This device corresponds with that shown at 12 and 13 on Figure 2.

Referring now to Figure 4, box $8^1$ houses transmitter 18 which limits the ray $3^2$ which it projects so that it registers only on receiver 19 in box $9^1$. Box $8^1$ also houses three receivers 20 on which a diverging ray $3^3$ from transmitter 21 in box $9^1$ registers. Box $8^1$ also houses a transmitter 22 which projects a diverging ray $3^4$ which registers on the three receivers 23 housed in box $9^1$. The rays $3^3$ and $3^4$ are infra red rays which are coupled so that if the reception of any of them is interrupted, a signal is given. This signal will preferably be an alarm if the device is sited in relation to a critical line as will be indicated in the description for Figure 5 and the ray $3^2$ has not been interrupted. The ray $3^2$ is a master ray and is independent of the rays $3^3$ and $3^4$ except that, if the master ray $3^2$ is interrupted it immediately gives a signal which prevents any signal given by the rays $3^3$ and $3^4$ caused by the passage of the same ball. This may be done, for instance, by electrically stopping the supply to the alarm normally generated by the interruption of any of the rays $3^3$ and $3^4$. Adjusting screws $28^1$ may be provided.

Referring now to Figure 5, the playing surface of a court $6^1$-$6^2$-$6^3$ is shown in relation to a cross-section XX of the rays $3^2$, $3^3$ and $3^4$ shown in plan in Figure 4 and a typical service line 24-$24^1$ the edge 24 of which is a critical line. The net is in the direction of the arrow B. The axes of all the rays $3^2$, $3^3$ amd $3^4$ are about 4.5 centimetres above the surface of the court and the highest effective part of any ray above the surface of the court is less than the height of a tennis ball making contact with the ground. The device is sited so that the ray $3^2$ runs parallel to and slightly distanced in (about 8 centimetres) from the vertical $P^1$ from the critical line 24. The nearest of the rays $3^3$ to the critical line 24 likewise runs parallel to and adjacent to the vertical $P^1$ from the critical line 24 but is about 15 centimetres outside the vertical $P_1$, that is, on the opposite side of the vertical $P^1$ to the master ray $3^2$. The other rays $3^3$ and $3^4$ are spaced pregressively from the vertical $P^1$. If a ball and its path 25 from a service strikes the ground between $6^3$ and $6^2$ and then interrupts the ray $3^2$, a light confirms that it is a "good" ball. If a ball and its path 28 from a service strikes the ground between $6^2$ and $6^1$ it will interrupt at least one of the rays $3^3$ or $3^4$ thus actuating an alarm. If a ball and its path 26 from a service interrupts the ray $3^2$ and then strikes the ground between $6^3$ and $6^2$ or strikes the critical line 24 and subsequently skids into the area $6^2$-$6^1$ interrupting any of the rays $3^3$ or $3^4$ the prior interruption of the ray $3^2$ electrically prevents any supply from generating an alarm and a light confirms that the ball was "good".

## Claims

1. An electrically operated device to monitor the area near a critical line ($24^2$, Figs. 1 & 3; 24, Fig. 5) on a tennis court, the device comprising at least one transmitter ($7^1$, Fig. 3; 18, Fig. 4) in a first position ($12^1$, Fig. 3; $8^1$, Fig. 4) and at least one receiver ($6^5$, Fig. 3; 19, Fig. 4) in a second position ($13^1$, Fig. 3; $9^1$, Fig. 4) and at least one signalling means controlled by the said reciever ($6^5$, Fig. 3; 19, Fig. 4), the said transmitter ($7^1$, Fig. 3; 18, Fig. 4) projecting a first ray (X3, Figs. 1 & 3; $3^2$, Figs. 4 & 5) the effective part of which registers on the said receiver ($6^5$, Fig. 3; 19, Fig. 4), the said first ray (X3, Figs. 1 & 3, $3^2$, Figs. 4 & 5) running substantially parallel to the said critical line ($24^2$, Fig. 1 & 3; 24, Fig. 5) and running over an area of the court (6-$24^2$, Fig. 1; $6^3$-24, Fig. 5) on which a ball ($27^1$, Fig. 1; 25, Fig. 3) in play would strike if it were a "good" ball and at least the said receiver ($6^5$, Fig. 1; 19, Fig. 4) comprising limiting means which limit the cross-section of the effective part of the said first ray (X3, Figs. 1 & 3, $3^2$, Figs. 4 & 5) throughout its useful length so that the said cross-section is substantially smaller in any dimension than the diameter of a tennis ball ($27^1$, Fig. 1; 25, Fig. 5) and so that the highest effective part of the said first ray (X3, Figs. 1 & 3, $3^2$, Figs. 4 & 5) above the playing surface of the court (6, Fig. 1; $6^1$, Fig. 5) is less than the height of a tennis ball ($27^1$, Fig. 1; 25, Fig. 5) in play making contact with the ground (6, Fig. 1; $6^1$, Fig. 5) and a signal being generated by the said signalling means on at least partial interruption of the said first ray (X3, Fig. 1; $3^2$, Fig. 5) and characterized in that the said signalling means generates a 'good' signal only on the complete interruption of the effective part of the said first ray (X3, Figs. 1 and 3; $3^2$, Figs. 4 and 5) and the said first ray (X3, Figs. 1 and 3; $3^2$, Figs. 4 and 5) being so positioned that a ball ($27^2$, Fig. 1; 26, Fig. 5) in play falling across the said area of the court (6-$24^2$, Fig. 1; $6^3$-24, Fig. 5) in which it would strike if it where a 'good' ball and towards the said critical line ($24^2$, Fig. 1; 24, Fig. 5) and which just completely interrupts the effective part of the said first ray (X3, Figs. 1 and 3; $3^2$, Figs. 4 & 5) must afterwards strike the said critical line ($24^2$, Fig. 1; 24, Fig. 5) and the receiver ($6^6$, Fig. 3; 23, Fig. 4) of any further ray (3, Fig. 3; $3^4$, Fig. 4) which is in the same position ($13^1$, Fig. 3; $9^1$, Fig. 4) as the receiver ($6^5$, Fig. 3; 19, Fig. 4) of the said first ray (X3, Figs. 1 and 3; $3^2$, Figs. 4 and 5) being spaced apart from the receiver ($6^5$, Fig. 3; 19, Fig. 4) of the said first ray (X3, Figs. 1 and 3; $3^2$, Figs. 4 and 5) by a distance greater than the diameter of a tennis ball ($27^1$, Fig. 1; 26, Fig. 5).

2. A device as in claim 1 comprising at least one further transmitter (21), at least one further receiver (20) and at least one further signalling means, the said further transmitter (21) projecting at least one further ray ($Y3^3$) the effective part of which registers on the said further receiver (20) the said further ray ($Y3^3$) running substantially parallel to the said critical line (24) and running over an area of the court ($6^2$-$6^1$) on which a ball (28) in play would strike if it were a "fault" ball and at least the said further receiver (20) comprising limiting means which limit the cross-section of the effective part of the said at least one further ray ($Y3^3$) throughout its useful length so that the said cross-section is substantially smaller in any dimension than the diameter of a tennis ball (28) and so that the highest effective part of the said at least one further ray ($Y3^3$) above the playing surface of

the court (6²-6¹) is less than the height of a tennis ball (28) in play making contact with the ground (6¹) and any other further rays (3³-3⁴) projected over the same area of the court (6²-6¹) having substantially the same characteristics relative to the ground and cross-sectional area as the said at least one further ray (Y3³) and being spaced progressively farther from the said critical line (24) than the said at least one further ray (Y3³) and the said further signalling means normally generating a "fault" signal if the effective area of any of the further rays (Y3³, 3³, 3⁴) is completely interrupted and the distance between any of the rays (3², Y3³, 3³, 3⁴) being not more than such that a ball in play (28) striking the ground in the area monitored by the device must completely interrupt one of the rays (3², Y3³, 3³, 3⁴) thereby causing a signal, and in which the said first ray (3²) is an independent ray known as the master ray which is connected to a separate signalling means which, when the reception of the effective part of the said master ray (3²) is completely interrupted, will generate a signal which prevents any signal which would have been caused by the interruption of any further ray (Y3³, 3³, 3⁴).

3. A device as in claim 2 in which the said at least one further ray (Y3³) in the nearest further ray to the vertical (P¹) from the said critical line (24) and is substantially parallel to the said critical line (24), and in which the said at least one further ray (Y3³) is projected in the opposite direction to the said master ray (3²).

4. A device as in claim 2 in which the said at least one further ray (Y3³) is the nearest further ray to the vertical (P¹) from the said critical line (24) and is substantially parallel to the said critical line (24), and in which the distance between the effective part of the said at least one further ray (Y3³) and the said critical line (24) is greater than the diameter of a tennis ball (28) and the distance between the effective parts of any further rays (Y3³, 3³, 3⁴) at their receivers in the same position is greater than the diameter of a tennis ball.

5. A device as in claim 1 and comprising at least one further transmitter (7) at least one further receiver (6⁴) the said at least one further transmitter (7) projecting at least one further ray (Y3) the effective part of which registers on the said further receiver (6⁴) running over an area of the court (6-24²) on which a ball (27¹) in play would strike if it were a "good" ball and at least the said further receiver (6⁴) comprising limiting means which limit the cross-section of the effective part of the said at least one further ray (Y3) throughout its useful length so that the said cross-section is substantially smaller than the diameter of a tennis ball (27¹) and so that the highest effective part of the said at least one further ray (Y3) above the playing surface of the court (6-24²) is less than the height of a tennis ball (27¹) in play making contact with the ground (6) and any other further rays (3) projected over the same area of the court (6-24²) having substantially the same characteristics relative to the ground and cross-sectional area as the said at least one further ray (Y3) and any further rays being spaced progressively farther from the said critical line (24²) and the said first ray (x3) and any further rays being coupled to the said first ray as far as signalling is concerned and the distance between any of the rays (X3, Y3, 3, 3) being not more than such that a ball (27¹) striking the ground in the area monitored by the device must completely interrupt the effective part of one of the rays (X3, Y3, 3, 3) thereby causing a "good" signal and the said at least one further ray (Y3) being the nearest further ray to the said first ray (X3), and wherein the said at least one further ray (Y3) is projected in the opposite direction to the said first ray.

6. A device as in claim 5, characterized in that the distance between the effective areas of any rays (X3, Y3, 3, 3) at their receivers in the same position is greater than the diameter of a tennis ball.

7. A device as in claims 5 or 6, characterized in that two transmitters (7¹) in a first position (12¹) project two rays (X3, 3) which are parallel to a critical line and which register on two receivers (6⁵) in a second position (13¹) and a further transmitter (7) in the said second position (13¹) projects a ray (Y3) which registers on a further receiver (6⁴) in the said first position (12¹), the arrangement being such that the axes of the rays (X3, Y3, 3) are substantially parallel to each other and alternate rays (X3, Y3, 3) are projected in opposite directions

8. A device as in claims 3 or 4, characterized in that a transmitter (21) in a first position (9¹) projects a diverging ray which registers on a plurality of receivers (20) in a second position (8¹) each of the said receivers (20) having limiting means, the arrangement being such that the said diverging ray is split by the said receivers (20) into a plurality of rays (Y3³, 3³, 3³) each having substantially similar cross-sections to the said first ray (X3) in claim 1 and the nearest of the rays (Y3³) to the said critical line (24) being parallel to and distanced from the said critical line (24).

9. A device as in claim 8, characterized in that additionally a further transmitter (22) in the said second position (8¹) projects a further diverging ray which registers on a plurality of further receivers (23) in the said first position (9¹) each receiver (23) having limiting means, the arrangement being such that the said further diverging ray is split by the said receivers (23) into a plurality of further rays (3⁴, 3⁴, 3⁴) the said further rays (3⁴, 3⁴, 3⁴) being projected in the opposite direction to the rays (Y3³, 3³, 3³) in claim 8.

10. A device as in claims 5 or 6 in which the further rays (Y3, 3, 3) are parallel to a critical line and to each other.

11. A device as in claims 2, 3, 4, 5, 6, 7, 8, 9 or 10, characterized in that the height of any further ray is substantially 4.5 centimetres at its axis.

12. An electrically operated device for monitoring the area near the critical line on a tennis court in accordance with claim 1 comprising a first box (8¹) which houses a master ray transmitter (18) adapted to project a master ray (3²) and a second further ray transmitter (22) adapted to project a second further ray (3⁴), the device also comprising a second box (9¹) which matches with the said first box (8¹), the said second box (9¹) housing a master ray receiver (19) with limiting means adapted to receive the said master ray (3²) and at least one second further ray receiver (23) with limiting means adapted to receive said second further ray (3⁴) projected by said second further ray transmitter (22) in said first box (8¹), and in which the said second box (9¹) also houses a first further ray transmitter (21) adapted to project a first further ray (3³) in the opposite direction to the said master ray (3²) and the said second further ray (3⁴) and the said first further ray transmitter (21) being sited between the said master ray receiver (19) and the said second further ray receiver (23) and the said first box (8¹) also houses at least one first further ray receiver (20) adapted to receive said further ray (3³) and sited between said master ray transmitter (18) and the said second further ray transmitter (22), the said master ray receiver (19) controlling signalling means and said further ray receivers (20, 23) controlling separate signalling means which can generate a signal if the reception of a ray by any further ray receiver (20, 23) is completely interrupted and wherein said signalling means controlled by said master ray receiver (19) will, if the reception of the effective part of the said master ray (3²) by the said master ray receiver (19) is completely interrupted, prevent any signal which would normally be caused by the interruption of the reception of any further ray by any further ray receiver (20, 23).

13. A device as in any of the preceding claims in which an infra red ray is used.

14. A device as in any of the preceding claims in which a gallium arsenide based ray is used.

## Patentansprüche

1. Eine elektrisch angetriebene Einrichtung zur Überwachung der Zone in der Nähe einer kritischen Linie (24², Figuren 1 und 3; 24, Fig. 5) uaf einem Tennisplatz, welche Einrichtung wenigstens einen Sender (7¹, Fig. 3; 18, Fig. 4) in einer ersten Stellung (12¹, Fig. 3; 8¹, Fig. 4) und wenigstens einen Empfänger (6⁵, Fig. 3, 19, Fig. 4) in einer zweiten Stellung (13¹, Fig. 3; 9¹, Fig. 4) und wenigstens ein von dem Empfänger (6⁵, Fig. 3; 19, Fig. 4) gesteuertes Signalierungsglied enthält, wobei der Sender (7¹, Fig. 3; 18, Fig. 4) einen ersten Strahl (X3, Figuren 1 und 3; 3², Figuren 4 und 5) projiziert, dessen wirksamen Teil auf den Empfänger (6⁵, Fig. 3; 19, Fig. 4), fällt, welcher erste Strahl (X3, Figuren 1 und 3; 3², Figuren 4 & 5) hauptsächlich parallel mit der genannten kritischen Linie (24², Fig. 1 und 3; 24, Fig. 5) läuft und über eine Zone des Tennisplatzes (6-24², Fig. 1; 6³-24, Fig. 5) läuft, worin ein Ball (27¹, Fig. 1; 25, Fig. 3) im Spiel, falls er ein "guter" Ball wäre, treffen würde, und wenigstens der Empfänger (6⁵, Fig. 1; 19, Fig. 4) Begrenzungsglieder enthält, welche den Durchschnitt des wirksamen Teils des ersten Strahls (X3, Figuren 1 und 3; 3², Figuren 4 und 5) über seine nützliche Länge derart begrenzen, dass dieser Durchschnitt in jeder Abmessung beträchtlich kleiner ist als der Durchmesser eines Tennisballs (27¹, Fig. 1; 25, Fig. 5) und derart, dass die Höhe des wirksamen Teils des ersten Strahls (X3, Fig. 1 und 3; 3², Figuren 4 & 5) über der Spielfläche des Tennisplatzes (6, Fig. 1; 6¹, Fig. 5) niedriger ist als die Höhe eines Tennisballs (27¹, Fig. 1; 25, Fig. 5) im Spiel, welcher den Boden (6, Fig. 1; 6¹, Fig. 5) berührt, und wobei das Signalierungsglied ein Signal auf wenigstens teilweise Unterbrechung des ersten Strahls (X3, Fig. 1; 3², Fig. 5) erzeugt, und dadurch gekennzeichnet, dass das Signalierungsglied ein "gutes" Signal nur auf die Gesamtunterbrechung des wirksamen Teils des ersten Strahls (X3, Figuren 1 und 3; 3², Figuren 4 und 5) erzeugt und wobei der erste Strahl (X3, Figuren 1 und 3; 3², Figuren 4 und 5) derart gestellt ist, dass ein Ball (27², Fig. 1; 26, Fig. 5) im Spiel, welcher die Zone des Tennisplatzes (6-24², Fig. 1; 6³-24, Fig. 5) überquert, worin er treffen würde, wenn er ein "guter" Ball wäre und auf die kritische Linie (24², Fig. 1; 24, Fig. 5) gerichtet wäre, und welcher gerade vollständig den wirksamen Teil des genannten ersten Strahls (X3, Figuen 1 und 3; 3², Figuren 4 und 5) unterbricht, danach die kritische Linie (24², Fig. 1; 24, Fig. 5) treffen muss, und der Empfänger (6⁶, Fig. 3; 23, Fig. 4) irgendeines weiteren Strahls (3, Fig. 3; 3⁴, Fig. 4), welcher in der gleichen Stellung (13¹, Fig. 3; 9¹, Fig. 4) ist als der Empfänger (6⁵, Fig. 3; 19, Fig. 4) des genannten ersten Strahls (X3, Fig. 1 und 3; 3², Figuren 4 und 5) in Abstand von dem Empfänger (6⁵, Fig. 3; 19, Fig. 4) des ersten Strahls (X3, Fig. 1 und 3; 3², Fig. 4 und 5) angeordnet ist, welcher Abstand grösser ist als der Durchmesser eines Tennisballs (27¹, Fig. 1; 26, Fig. 5).

2. Eine Einrichtung nach Anspruch 1, welche wenigstens einen weiteren Sender (21), wenigstens einen weiteren Empfänger (20) und wenigstens ein weiteres Signalisierungsglied enthält, wobei der weitere Sender (21) wenigstens einen weiteren Strahl (Y3³) projiziert, dessen wirksamen Teil auf den weiteren Empfänger (20) fällt, wobei der weitere Strahl (Y3³) hauptsächlich parallel mit der kritischen Linie (24) läuft und über eine Zone des Tennisplatzes (6²-6¹) läuft, worin ein Ball (28) im Spiel, falls er ein "Fehler" Ball wäre, treffen würde, und wenigstens der weitere Empfänger (20) Begrenzungsglieder enthält, welche den Durchschnitt des wirksamen Teils des wenigstens einen weiteren Strahls (Y3³) über seine nützliche Länge derart begrenzen, dass dieser Durchschnitt in jeder Abmessung beträchtlich kleiner ist als der Durchmesser eines Tennisballs (28) und derart, dass die Höhe des wirksamen Teils des wenigstens einen weiteren Strahls (Y3³) über der Spielfläche des Tennisplatzes (6²-6¹) niedriger ist als die Höhe eines Tennisballs (28) im Spiel, welcher den Boden (6¹) berührt, und irgendwelche über die gleiche Zone des Tennisplatzes (6²-6¹) projizierten anderen Strahlen (3³-3⁴), welche hauptsächlich die gleichen Merkmale in Bezug auf den Boden und den Durchschnittflächeninhalt wie der wenigstens eine weitere Strahl (Y3³) haben und fortschreitend weiter im Abstand von der kritischen Linie (24) als der wenigstens eine Weitere Strahl (Y3³) sind und das Weitere Signalierungsglied normalerweise ein "Fehler" Signal erzeugt, falls der wirksame Durchschnittflächeninhalt irgendeins der weiteren Strahlen (Y3³, 3³, 3⁴) voll ständig unterbrochen ist und der Abstand zwischen irgendwelchen der Strahlen (3², Y3³, 3³, 3⁴) nicht mehr ist als der Abstand, der ein Ball (28) im Spiel, welcher den Boden in der von der Einrichtung überwachten Zone berührt, vollständig einen der Strahlen (Y3³, 3³, 3⁴) vollständig unterbrochen dadurch ein Signal bewirkend, und worin der erste Strahl (3²) ein unabhängiger Strahl, bekannt als der Hauptstrahl, ist, der mit einem einzelnen Signalierungsglied verbunden ist, welches Signalierungsglied, wenn der Empfang des wirksamen Teils des Hauptstahls (3²) vollständig unterbrochen ist, ein Signal erzeugen wird, das irgendwelchem anderen Signal, dass von der Unterbrechung irgendeines weiteren Strahls (Y3³, 3³, 3⁴) bewirkt sein würde, vorbeugt.

3. Eine Einrichtung nach Anspruch 2, worin der wenigstens eine weitere Strahl (Y3³) der nächste weitere Strahl zu dem Vertikal (P¹) von der kritischen Linie (24) ab ist, und hauptsächlich parallel zu dieser kritischen Linie (24) ist, und worin der wenigstens eine weitere Strahl (Y3³) in entgegengesetzter Richtung zu dem Hauptstrahl (3²) projiziert wird.

4. Eine Einrichtung nach Anspruch 2, worin der wenigstens eine weitere Strahl (Y3³) der nächste weitere Strahl zu dem Vertikal (P¹) von der kritischen Linie (24) ab ist, und hauptsächlich parallel zu dieser kritischen Linie (24) ist, und worin der Abstand zwischen dem wirksamen Teil dieses wenigstens einen weiteren Strahl (Y3³) und dieser kritischen Linie (24) grösser ist als der Durchmesser eines Tennisballs (28) und der Abstand zwischen den wirksamen Teilen irgendwelcher weiteren Strahlen (Y3³, 3³, 3⁴) auf ihren Empfängern in der gleichen Stellung grösser ist als der Durchmesser eines Tennisballs.

5. Eine Einrichtung nach Anspruch 1, welche Einrichtung wenigstens einen weiteren Sender (7) und wenigstens einen weiteren Empfänger (6⁴) enthält, wobei der wenigstens eine weitere Sender (7) wenigstens einen weiteren Strahl (Y3) projiziert, dessen wirksamen Teil auf diesen weiteren Empfänger (6⁴) fällt, welcher Strahl über die Zone des Tennisplatzes (6-24²) läuft, worin ein Ball (27¹) im Spiel, falls er ein "guter" Ball wäre, treffen würde, und wenigstens der weitere Empfänger (6⁴) Begrenzungsglieder enthält, welche der Durchschnitt des wirksamen Teils des wenigstens einen weiteren Strahls (Y3) über seine nützliche Länge derart begrenzen, dass dieser Durchschnitt beträchtlich kleiner ist als der Durchmesser eines Tennisballs (27¹) und derart, dass die Höhe des wirksamen Teils des wenigstens einen weiteren Strahls (Y3) über der Spielfläche des Tennisplatzes (6-24²) niedriger ist als die Höhe eines Tennisballs (27¹) im Spiel, welcher den Boden (6) berührt, und irgendwelche über die gleiche Zone des Tennisplatzes (6-24²) projizierten anderen, weiteren Strahlen (3), welche hauptsächlich die gleichen Merkmale in bezug auf den Boden und den Durchschnittflächeninhalt wie der wenigstens eine weitere Strahl (Y3) haben, und irgendwelche weiteren Strahlen fortschreitend weiter im Abstand von der kritischen Linie (24²) als der erste Strahl (X3) sind und irgendwelche weiteren Strahlen zu diesem ersten Strahl, was die Signalierung betrifft, gekuppelt sind, und der Abstand zwischen irgendwelchen der Strahlen (X3, Y3, 3, 3) nicht mehr ist als der Abstand, der ein Ball (27¹), welcher den Boden in der von der Einrichtung überwachten Zone berührt, vollständig den wirksamen Teil eines der Strahlen (X3, Y3, 3, 3) unterbrechen muss, dadurch ein "gutes" Signal bewirkend, und der wenigstens eine weitere Strahl (Y3) der nächste weitere Strahl zu dem ersten Strahl (X3) ist, und worin der wenigstens eine weitere Strahl (Y3) in entgegengesetzter Richtung zu diesem ersten Strahl projiziert wird.

6. Eine Einrichtung nach Anspruch 5, dadurch gekennzeichnet, dass der Abstand zwischen den wirksamen Durchschnittflächen irgendwelcher Strahlen (X3, Y3, 3, 3) auf ihren Empfänger in der gleichen Stellung grösser ist als der Durchmesser eines Tennisballs.

7. Eine Einrichtung nach Anspruch 5 oder 6, dadurch gekennzeichnet, dass zwei Sender (7¹) in einer ersten Stellung (12¹) zwei Strahlen (X3, 3) projizieren, welche parallel zu einer kritischen Linie sind und welche auf zwei Empfänger (6⁵) in einer zweiten Stellung (13¹) fallen, und ein weiterer Sender (7) in dieser zweiten Stellung (13¹) einen Strahl (Y3) projiziert, welcher Strahl auf einen weiteren Empfänger (6⁴) in dieser ersten Stellung (12¹) fällt, wobei die Anordnung derart ist, dass die Achsen der Strahlen (X3, Y3, 3) einander hauptsächlich parallel sind und jeder zweite Strahl (X3, Y3, 3) in entgegengesetzter Richtung projiziert wird.

8. Eine Einrichtung nach Anspruch 3 oder 4, dadurch gekennzeichnet, dass ein Sender (21) in einer ersten Stellung ($9^1$) einen divergierenden Strahl projiziert, welcher auf eine Mehrzahl von Empfängern (20) in einer zweiten Stellung ($8^1$) fällt, wobei jeder dieser Empfänger (20) Begrenzungsglieder hat, und die Anordnung derart ist, dass der divergierende Strahl von den Empfängern (20) in eine Mehrzahl von Strahlen ($Y3^3$, $3^3$, $3^3$) getrennt wird, wobei jeder Strahl einen hauptsächlich ähnlichen Durchschnitt in bezug auf den ersten Strahl (X3) in Anspruch 1 hat und der Strahl am nächsten zu der kritischen Linie (24) parallel zu der kritischen Linie (24) und in Abstand von dieser kritischen Linie (24) ist.

9. Eine Einrichtung nach Anspruch 8, dadurch gekennzeichnet, dass zusätzlich ein weiterer Sender (22) in der zweiten Stellung ($8^1$) einen weiteren divergierenden Strahl projiziert, welcher auf eine Mehrzahl weiterer Empfänger (23) in dieser ersten Stellung ($9^1$) fällt, wobei jeder Empfänger (23) Begrenzungsglieder hat, und die Anordnung derart ist, dass der weitere divergierende Strahl von diesen Empfängern (23) in eine Mehrzahl weiterer Strahlen ($3^4$, $3^4$, $3^4$) getrennt wird, wobei diese weiteren Strahlen ($3^4$, $3^4$, $3^4$) in der entgegengesetzten Richtung zu den Strahlen ($Y3^3$, $3^3$, $3^3$) in Anspruch 8 projiziert werden.

10. Eine Einrichtung nach Anspruch 5 oder 6, worin die weiteren Strahlen (Y3, 3, 3) parallel zu einer kritischen Linie und zueinander sind.

11. Eine Einrichtung nach Anspruch 2, 3, 4, 5, 6, 7, 8, 9 oder 10, dadurch gekennzeichnet, dass die Höhe der Achse irgendeines weiteren Strahls hauptsächlich 4.5 cm ist.

12. Eine elektrisch angetriebene Einrichtung zur Überwachung der Zone in der Nähe der kritischen Linie auf einem Tennisplatz gemäss Anspruch 1, welche Einrichtung einen ersten Kasten ($8^1$) enthält, welcher einen für die Projizierung eines Hauptstrahls ($3^2$) geeigneten Hauptstrahlsender (18) und einen für die Projizierung eines zweiten weiteren Strahls ($3^4$) geeigneten zweiten weiteren Strahlsender (22) umfasst, wobei die Einrichtung zudem eine zweiten Kasten ($9^1$) enthält, der dem ersten Kasten ($8^1$) entspricht, welcher zweite Kasten ($9^1$) einen zum Empfang des Hauptstrahls ($3^2$) geeigneten mit Begrenzungsgliedern ausgestatteten Hauptstrahlempfänger (19) und wenigstens einen mit Begrenzungsgliedern ausgestatteten zweiten weiteren Strahlempfänger (23), der zum Empfang des von diesem zweiten weiteren Strahlsender (22) im ersten Kasten ($8^1$) projizierten zweiten weiteren Strahls ($3^4$) umfasst, und worin der zweite Kasten ($9^1$) noch einen zur Projizierung eines ersten weiteren Strahls ($3^3$) in der entgegengesetzten Richtung zu dem Hauptstrahl ($3^2$) geeigneten ersten weiteren Strahlsender (21) umfasst, der zwischen dem Hauptstrahlempfänger (19) und dem zweiten weiteren Strahlempfänger (23) aufgestellt ist, und der erste Kasten ($8^1$) zu dem wenigstens einen zum Empfang dieses weiteren Strahls ($3^3$) geeigneten ersten weiteren Strahl- empfänger (20) umfasst, der zwischen den (Hauptstrahlsender (18) und dem zweiten Weiteren Strahlsender (22) aufgestellt ist, wobei der Hauptstrahlempfänger (19) das Signalierungsglied steuert und die weiteren Strahlempfänger (20, 23) einzelne Signalierungsglieder steuern, welche ein Signal erzeugen können, falls der Strahlempfang von irgendeinem weiteren Strahlempfänger (20, 23) vollständig unterbrochen worden ist, und worin das von dem Hauptstrahlempfänger (19) gesteuerten Signalierungsglied, wenn der Empfang des wirksamen Teils des Hauptstrahls ($3^2$) von diesem Hauptstrahlempfänger (19) vollständig unterbrochen ist, irgendwelchem Signal, das normalerweise von der Unterbrechung irgendeines weiteren Strahls von irgendeinem weiteren Strahl-empfänger (20, 23) bewirkt sei, vorbeugen wird.

13. Eine Einrichtung einer der vorhergehenden Ansprüche, worin ein Infrarotstrahl verwendet wird.

14. Eine Einrichtung nach einem der vorhergehenden Ansprüche, worin ein von Galliumarsenide ausgehender Strahl verwendet wird.

**Revendications**

1. Un dispositif actionné électriquement pour surveiller la zone près d'une ligne critique ($24^2$, fig. 1 et 3; 24, fig. 5) sur un court de tennis, ce dispositif comprenant au moins un émetteur ($7^1$, fig. 3; 18, fig. 4) à une première position ($12^1$, fig. 3; $8^1$, fig. 4), au moins un récepteur ($6^5$, fig. 3; 19, fig. 4) à une seconde position ($13^1$, fig. 3; $9^1$, fig. 4) et au moins un moyen de signalisation commandé par ledit récepteur ($6^5$, fig. 3; 19, fig. 4), ledit émetteur ($7^1$, fig. 3; 18, fig. 4) projetant un premier rayon (X3, fig. 1 et 3; $3^2$, fig. 4 et 5) dont la partie efficace vient en correspondance sur ledit récepteur ($6^5$, fig. 3; 19, fig. 4), ledit premier rayon (X3, fig. 1 et 3; $3^2$, fig. 4 et 5) s'étendant de façon substantiellement parallèle à ladite ligne critique ($24^2$, fig. 1 et 3; 24, fig. 5) et sur une zone du court ($6-24^2$, fig. 1; $6^3-24$, fig. 5) sur laquelle une balle en jeu ($27^1$, fig. 1; 25, fig. 3) frapperait si elle était une "bonne" balle, et au moins ledit récepteur ($6^5$, fig. 3; 19, fig. 4) comprenant des moyens qui limitent la section transversale de la partie efficace dudit premier rayon (X3, fig. 1 et 3; $3^2$, fig. 4 et 5) sur toute sa longueur utilie de façon que ladite section soit substantiellement moindre dans toutes ses dimensions que le diamètre d'une balle de tennis ($27^1$, fig. 1; 25, fig. 5) et que la partie efficace la plus haute dudit premier rayon (X3, fig. 1 et 3; $3^2$, fig. 4 et 5) au-dessus de la surface de jeu du court (6, fig. 1; $6^1$, fig. 5) soit moindre que la hauteur d'une balle de tennis en jeu ($27^1$, fig. 1; 25, fig. 5) en contact avec le sol (6, fig. 1; $6^1$, fig. 5), et un signal étant engendré par ledit moyen de signalisation après interruption au moins partielle dudit premier rayon (X3, fig. 1 et 2: $3^2$, fig. 5), caractérisé en ce que ledit moyen de signalisation n'engendre un signal "bonne" que lors de l'interruption complète de la partie efficace dudit premier rayon (X3, fig. 1 et 2; $3^2$, fig. 4 et 5), et ledit premier rayon (X3, fig. 1 et 3; $3^2$, fig. 4 et 5) étant disposé de façon telle qu'une balle en jeu ($27^2$, fig. 1; 26, fig. 5) tombant sur ladite zone du court (6-$24^2$, fig. 1; $6^3$-24, fig. 5) sur laquelle elle frapperait si elle était une "bonne" balle et en direction de ladite ligne critique ($24^2$, fig. 1; 24, fig. 5), et qui interrompt juste complètement la partie efficace dudit premier rayon (X3, fig. 1 et 3; $3^2$, fig. 4 et 5), doit ensuite frapper ladite ligne critique ($24^2$, fig. 1; 24, fig. 5), et le récepteur ($6^6$, fig. 3; 23, fig. 4) de tout autre rayon (3, fig. 3; $3^4$, fig. 4) qui se trouve à la même position ($13^1$, fig. 3; $9^1$, fig. 4) que le récepteur ($6^5$, fig. 3; 19, fig. 4) dudit premier rayon (X3, fig. 1 et 3; $3^2$, fig. 4 et 5) étant écarté du récepteur ($6^5$, fig. 3; 19, fig. 4) dudit premier rayon (X3, fig. 1 et 3; $3^2$, fig. 4 et 5) d'une distance plus grande que le diamètre d'une balle de tennis ($27^1$, fig. 1; 26, fig. 5).

2. Un dispositif comme dans la revendication 1, comprenant au moins un autre émetteur (21, au moins un autre récepteur (20) et au moins un autre moyen de signalisation, ledit autre émetteur (21) projetant au moins un autre rayon ($Y3^3$) dont la partie efficace est en correspondance sur ledit autre récepteur (20), cet autre rayon ($Y3^3$) s'étendant de façon substantiellement parallèle à ladite ligne critique (24) et sur une zone du court ($6^2$-$6^1$) sur laquelle une balle en jeu (28) viendrait frapper si c'était une balle "faute", et au moins ledit autre récepteur (20) comprenant des moyens qui limitent la section transversale de la partie efficace dudit autre rayon ($Y3^3$) sur toute sa longueur utile de sorte que ladite section transversale est substantiellement plus petite dans toutes ses dimensions que le diamètre d'une balle de tennis (28) et que la partie efficace la plus haute d'au moins ledit autre rayon ($Y3^3$) au-dessus de la surface du court ($6^2$-$6^1$) est moindre que la hauteur d'une balle de tennis en jeu (28) faisant contact avec le sol ($6^1$), et tous autres rayons quelconques ($3^3$-$3^4$) projetés sur la même zone du court ($6^2$-$6^1$) ayant substantiellement les mêmes caractéristiques par rapport au sol et à la surface de section transversale que ledit au moins autre rayon ($Y3^3$) et étant progressivement espacés davantage de ladite ligne critique (24) que ledit au moins premier rayon ($Y3^3$), et ledit autre moyen de signalisation engendrant normalement un signal "faute" si la surface effective de l'un quelconque des autres rayons ($Y3^3$, $3^3$, $3^4$) est complètement interrompue, et la distance entre les rayons quelconques ($3^2$, $Y3^3$, $3^3$, $3^4$) n'étant pas plus que ce qu'il faut pour qu'une balle en jeu (28) frappant le sol dans la zone surveillée par le dispositif doive interrompre complètement l'un de ces rayons ($3^2$, $Y3^3$, $3^3$, $3^4$) en provoquant un signal, et dans lequel ledit premier rayon ($3^2$) est un rayon indépendant connu comme le rayon maître, qui est relié à un moyen de signalisation séparé lequel, lorsque la réception de la partie efficace dudit rayon maître ($3^2$) est complètement interrompue, va engendrer un signal empêchant tout signal qui aurait pu être provoqué par l'interruption d'un autre rayon quelconque ($Y3^3$, $3^3$, $3^4$).

3. Un dispositif comme dans la revendication 2, dans lequel ledit au moins autre rayon ($Y3^3$) est le rayon le plus rapproché de la verticale ($P^1$) élevée à partir de ladite ligne critique (24) et est substantiellement parallèle à cette ligne (24), et dans lequel ledit au moins autre rayon ($Y3^3$) est projeté dans la direction opposée à celle du rayon maître ($3^2$).

4. Un dispositif comme dans la revendication 2, dans lequel ledit au moins autre rayon ($Y3^3$) est le rayon le plus rapproché de la verticale ($P^1$) élevée à partir de ladite ligne critique (24), et est substantiellement parallèle à cette ligne (24), dans lequel la distance entre la partie efficace dudit au moins autre rayon ($Y3^3$) et ladite ligne critique (24) est plus grande que le diamètre d'une balle de tennis (28), et dans lequel la distance entre les parties efficaces de tous autres rayons quelconques ($Y3^3$, $3^3$, $3^4$) vers leur récepteur à la même position est plus grande que le diamètre d'une balle de tennis.

5. Un dispositif comme dans la revendication 1 et comprenant au moins un autre émetteur (7), au moins un autre récepteur ($6^4$), ledit au moins autre émetteur (7) projetant au moins un autre rayon (Y3) dont la partie efficace se trouve en correspondance sur ledit autre récepteur ($6^4$), ce rayon s'étendant sur une zone du court (6-$24^2$) sur laquelle une balle en jeu ($27^1$) viendrait frapper si c'était une belle "bonne", et au moins ledit autre récepteur ($6^4$) comprenant des moyens qui limitent la section transversale de la partie efficace dudit au moins autre rayon (Y3) sur toute sa longeur utile de façon que ladite section soit substantiellement plus petite que le diamètre d'une balle de tennis ($27^1$) et que la partie efficace la plus haute dudit au moins autre rayon (Y3) au-dessus de la surface de jeu du court (6-$24^2$) soit moindre que la hauteur d'une balle de tennis en jeu ($27^1$) faisant contact avec le sol (6), et tous les autres rayons quelconques ainsi projetés sur la même zone du court (6-$24^2$) ayant substantiellement les mêmes caractéristiques par rapport au sol et à leur section transversale que ledit au moins autre rayon (Y3), et tous autres rayons quelconques étant espacés progressivement plus loin de ladite ligne critique ($24^2$) que ledit premier rayon (X3), et tous autres rayons quelconques étant accouplés audit premier rayon pour autant que cela concerne la signalisation, et la distance entre ces rayons quelconques (X3, Y3, 3, 3) n'étant pas plus grande qu'il ne faut pour qu'une balle ($27^1$) frappant le sol dans la zone surveillée par le dispositif doive complètement interrompre la partie efficace de l'un des rayons (X3, Y3, 3, 3) en provoquant ainsi un signal "bonne", et ledit au moins autre rayon (Y3) étant le rayon suivant le plus près dudit premier rayon (X3), et dans lequel ledit au moins autre rayon ($Y^3$) est projeté suivant la direction opposée audit premier rayon.

6. Un dispositif comme dans la revendication 5, caractérisé en ce que la distance entre les zones efficaces de tous les rayons (X3, Y3, 3, 3) vers leurs récepteurs à la même position est plus grande que le diamètre d'une balle de tennis.

7. Un dispositif suivant les revendications 5 ou 6, caractérisé en ce que deux émetteurs ($7^1$) à une première position ($12^1$) projettent deux rayons (X3, 3) qui sont parallèles à une ligne critique et qui sont en correspondance sur deux récepteurs ($6^5$) à une seconde position ($13^1$), et en ce qu'un autre émetteur (7) à ladite seconde positon ($13^1$) projette un rayon (Y3) qui est en correspondance sur un autre récepteur ($6^4$) à ladite première position ($12^1$), l'arrangement étant tel que les axes des rayons (X3, Y3, 3) sont substantiellement parallèles les uns aux autres et que les rayons alternés (X3, Y3, 3) sont projetés dans des sens opposés.

8. Un dispositif comme dans les revendications 3 ou 4, caractérisé en ce qu'un émetteur (21) à une première position ($9^1$) projette un rayon divergent qui se trouve en correspondance sur plusieurs récepteurs (20) à une seconde position ($8^1$), chacun desdits récepteurs (20) comportant des moyens limiteurs, l'agencement étant tel que ledit rayon divergent est divisé par lesdits récepteurs (20) en une pluralité de rayons ($Y3^3$, $3^3$, $3^3$) dont chacun comporte substantiellement une section transversale semblable à celle dudit premier rayon (X3) dans la revendication 1, et celui des rayons ($Y3^3$) le plus rapproché de ladite ligne critique (24) étant parallèle à cette ligne (24) et écarté de celle-ci.

9. Un dispositif comme dans la revendication 8, caractérisé en ce qu'en outre un autre émetteur (22) à ladite seconde position ($8^1$) projette un autre rayon divergent qui vient en correspondance sur une pluralité d'autres récepteurs (23) à ladite première position ($9^1$), chaque récepteur (23) ayant des moyens limiteurs, l'arrangement étant tel que ledit autre rayon divergent est divisé par lesdits récepteurs (23) en une pluralité d'autres rayons ($3^4$, $3^4$, $3^4$), lesdits autres rayons ($3^4$, $3^4$, $3^4$) étant projetés dans le sens opposé aux rayons ($Y3^3$, $3^3$, $3^3$) de la revendication 8.

10. Un dispositif comme dans les revendications 5 ou 6, dans lequel les autres rayons (Y3, 3, 3) sont parallèles à une ligne critique ainsi que les uns aux autres.

11. Un dispositif comme dans les revendications 2, 3, 4, 5, 6, 7, 8, 9 ou 10, caractérisé en ce que la hauteur de n'importe quel autre rayon quelconque est substantiellement de 4,5 cm à son axe.

12. Un dispositif actionné électriquement pour surveiller la surface près de la ligne critique sur un court de tennis, conformément à la revendication 1, comprenant un premier boîtier ($8^1$) qui renferme un émetteur (18) propre à projeter un rayon maître ($3^2$) et un second autre émetteur (22) propre à projeter un second autre rayon ($3^4$), ce dispositif comprenant aussi un second boîtier ($9^1$) qui correspond avec ledit premier boîtier ($8^1$), ce second boîtier ($9^1$) renfermant un récepteur (19) avec moyens limiteurs, propre à recevoir ledit rayon maître ($3^2$), et au moins un second autre récepteur (23) avec moyens limiteurs, propre à recevoir ledit second autre rayon ($3^4$) projeté par le second autre émetteur (22) dans le premier boîtier ($8^1$), et dans lequel ledit second boîtier ($9^1$) renferme également un premier autre émetteur (21) propre à projeter un premier autre rayon ($3^3$) dans le sens opposé audit rayon maître ($3^2$), et ledit second autre rayon ($3^4$) et ledit premier autre émetteur (21) étant situés entre ledit récepteur de rayon maître (19) et ledit second autre récepteur (23), et ledit premier boîtier ($8^1$) renferment au moins un premier autre récepteur (20) propre à recevoir ledit autre rayon ($3^2$) et situé entre ledit émetteur de rayon maître (18) et ledit second autre émetteur (22), ledit récepteur de rayon maître (19) commandant des moyens de signalisation et ledit autre récepteur (20, 23) commandant des moyens de signalisation séparés qui peuvent engendrer un signal si la réception d'un rayon par l'un quelconque des autres récepteurs (20, 23) est complètement interrompue, et dans lequel lesdits moyens de signalisation commandés par ledit récepteur de rayon maître (19) vont, si la réception de la partie efficace de ce rayon ($3^2$) par ledit récepteur correspondant (19), est complètement interrompue, empêcher tout signal qui serait normalement provoqué par l'interruption de la réception d'un autre rayon quelconque par n'importe quel autre récepteur.

13. Un dispositif comme dans l'une quelconque des revendications précédentes, dans lequel on utilise un rayon infrarouge.

14. Un dispositif comme dans l'une quelconque des revendications précédentes, dans lequel on utilise un rayon basé sur l'arséniure de gallium.

Fig. 1.

Fig. 2.

Fig. 3.

Fig. 4.

Fig. 5.